# EUROPEAN PATENT SPECIFICATION

(11) **EP 2 502 808 B1**
(45) Date of publication and mention of the grant of the patent: **04.01.2017**
(21) Application number: 11159389.3
(22) Date of filing: 23.03.2011
(51) Int. Cl.: B62D 61/12, B62D 63/06, B60G 17/052

(54) **Device and method for controlling a lifting axle of an industrial motor vehicle**
Vorrichtung und Verfahren zur Steuerung einer Liftachse eines Industriemotorfahrzeugs
Dispositif et procédé de contrôle d'un axe relevable de véhicule industriel à moteur

(43) Date of publication of application: 26.09.2012
(73) Proprietor: Astra Veicoli Industriali S.p.A., 29100 Piacenza (IT)
(72) Inventor: Moratti, Stefano, 29010, Cadeo (IT)
(74) Representative: Franzolin, Luigi

(56) References cited:
- EP-A2- 0 352 426
- DE-A1- 2 925 190
- DE-U- 1 932 988
- FR-A1- 2 281 849

## Description

### Application field of the invention

The present invention refers to the field of the industrial motor vehicles equipped with an added axle and with a respective control system of the added axle.

### Description of the prior art

In industrial vehicles, the possibility of lifting or of lowering an added axle, when the loading conditions require it, is known in the art. An example of known lifting system is disclosed in the patent application FR2281849 According to some known management systems, when it is necessary to control more than one added axle, these are controlled all together, namely by lowering or by lifting all of them.

The signal used to lower the added axle is the pressure in a pneumatic suspension of a main axle, namely an axle that is always to the ground.

Such pressure value is proportional to the load acting on such axle. When the pressure signal reaches a predetermined value, a group of valves managing the added axle empty the pneumatic lifts and connect the pneumatic suspensions of the main axle with the pneumatic suspensions of the added axle which provided the pressure signal: thus the control system, for example ECAS™ by WABCO®, controls the added axle and the main axle as they were a single axle.

In such specific case, the management of the lifting and of the lowering of the added axle depends on an enbloc pneumatic-controlled valve unit provided by WABCO®, wherein only the connectors for connecting the pneumatic circuits of the vehicle are reachable from the outside, according to a predetermined scheme proposed by the manufacturer itself for the application of trailers or semitrailers with liftable axles.

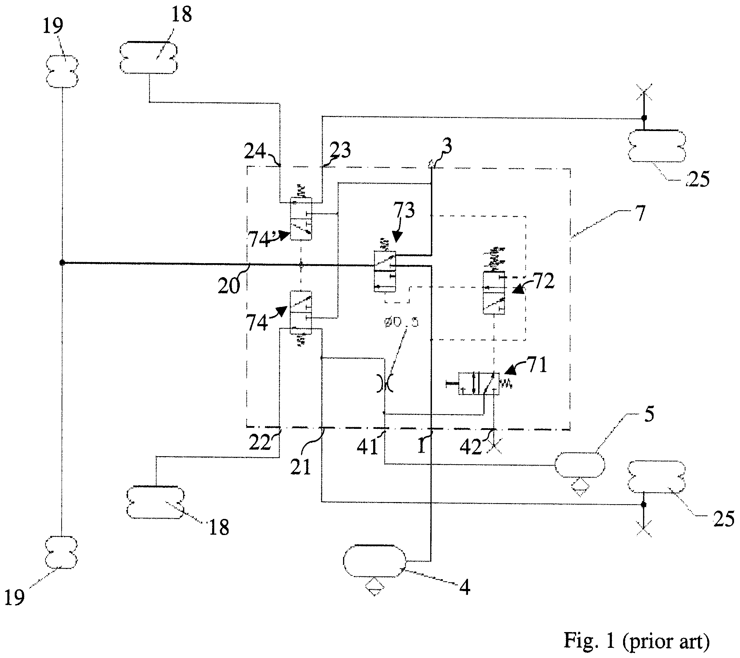

In particular figure 1 shows the internal scheme of the valve unit 7 included in a respective configuration scheme provided by the manufacturer itself, according to the preamble of claim 1.

The valve unit comprises two-position valves which are brought in release position by a return spring or in active position by a pneumatic or manual pressure acting on the valve control, against the action of the return spring.

The valve unit 7 comprises a connector 21 connected to the control of a first drive valve 72 which in release position connects the connector 1, connected to an external compressed air source 4, with the control of a second drive valve 73 which is activated by connecting the connector 20, connected to the lifting bellows 19, with the connector 1. This results in the lifting of the added axle.

In active position the valve 73 drives the symmetric valves 74, 74' which are consequently activated and thus connect the pneumatic suspensions 18, by means of the respective connectors 22 and 24, with the venting connector 3. This results in the emptying of the pneumatic suspensions 18 of the added axle.

When the pressure of the connector 21 increases, the valve 72 is brought active position, deactivating the valve 73 which connects the connector 20 with the venting connector 3, namely emptying the pneumatic lifts 19, and releasing the symmetric valves 74 and 74' which connect the connector 23 and 21 with the connector 24 and 22 respectively, namely pairing the pneumatic suspensions 18 with the pneumatic suspensions 25 on the same side of the rear main axle of the vehicle.

A further manual valve 71 is placed between the connector 21 and the control of the drive valve 72. Such further valve 71 is usually in release position, thus allowing the connector 21 and the control of the drive valve 72 to be connected. When the valve button 71 is pressed, it forces the deactivation of the valve 72 connecting the respective control with the connector 42, thus determining the emptying of the pneumatic suspensions 18 and the lifting of the added central axles.

According to a first aspect, the connector 21 has a double function: it is both an inlet for the valve unit 7, determining the activation/deactivation of the valve 72, and it is an inlet for filling the pneumatic suspension 18 connected to the connector 22.

When the connectors 21 and 22 communicate between each other, as well as the connectors 23 and 24, the right pneumatic suspension 18 is pneumatically connected, namely paired, with the respective right pneumatic suspension 25. Thus, from the pneumatic point of view, the two axles are paired and are detected by the control system of the suspensions as a single axle.

A first problem of such scheme depends on the fact that a single pneumatic suspension 25 is monitored for the lowering of the added axle.

Between the connector 21 and the valve 71 a narrowing 0.5 is present and cooperates with an external compensation tank 5, connected by the connector 41, in order to avoid the activation of the valve unit due to a sudden pressure increase at the connector 21, generated by jolts due to the unevenness of the road.

The motor vehicle's dynamic behavior is very different from the dynamic behavior of trailers or semitrailers, thus, in case of an unbalanced load, there is the risk that the central added axle is not promptly activated.

The scheme provided by the manufacturer may generate anomalous behaviors in vehicle's stability while travelling, also because of the different stiffness of the chassis of truck with respect to the chassis of an articulated vehicle. This aspect of vehicle's behavior is particularly important in specific manoeuvres: routes with hairpin bends, wide roundabouts, lane changing, obstacle avoiding manoeuvres, etc. Indeed, in such cases, the behavior of the two sides of the vehicle is unbalanced.

Moreover, the behavior of a pneumatic system is unstable since the control of the added axle is not defined according to a hysteresis cycle that is adequate to the behavior of a motor vehicle (the pressure value for axle that lowers is different than the pressure value for axle that lifts).

Another aspect to be considered is that the pneumatic system is extremely slow, just because it is not suitable to the dynamic applications in motor vehicles. Such slow response is not modifiable, since the aforementioned narrowing 0.5 is integrated in the valve unit 7 and cannot be reached from the outside.

Valve units of such type are manufactured by firms specialized in the field, such as WABCO®, and an ad hoc manufacturing would not be economically sustainable and justifiable.

### Summary of the invention

Therefore the aim of the present invention is to overcome all the drawbacks set forth above and to provide a control device of a first or a further added axle of an industrial motor vehicle, and to provide the appropriate details, in case such added axle is a second added axle.

The object of the present invention is a control device of a first or a further added axle of an industrial motor vehicle, according to claim 1.

Another aim of the present invention is to provide a configuration method of a control device of a first or a further added axle of an industrial motor vehicle, suitable to overcome all the problems set forth above.

A particular object of the present invention is a configuration method of a control device of a first or a further added axle of an industrial motor vehicle, according to claim 4.

According to a particular aspect of the invention, a valve unit for controlling an added axle, of the type known in the art, is included in a control scheme in order to overcome the limits and the problems due to the same valve unit and to the control schemes provided by the manufacturer of the valve unit itself.

The present invention will be described more fully in the claims, that are an integral part of the present invention.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 shows a circuit scheme for controlling a second added axle according to the prior art,
figure 2 shows a circuit scheme for controlling a second added axle according to the present invention, the same figure shows also several characteristics of different In further advantageous embodiments described in the following,
figure 3 shows a scheme of the added axles of a vehicle.

In the figures the same reference numbers and letters identify the same elements or components.

### Detailed description of preferred embodiments of the invention

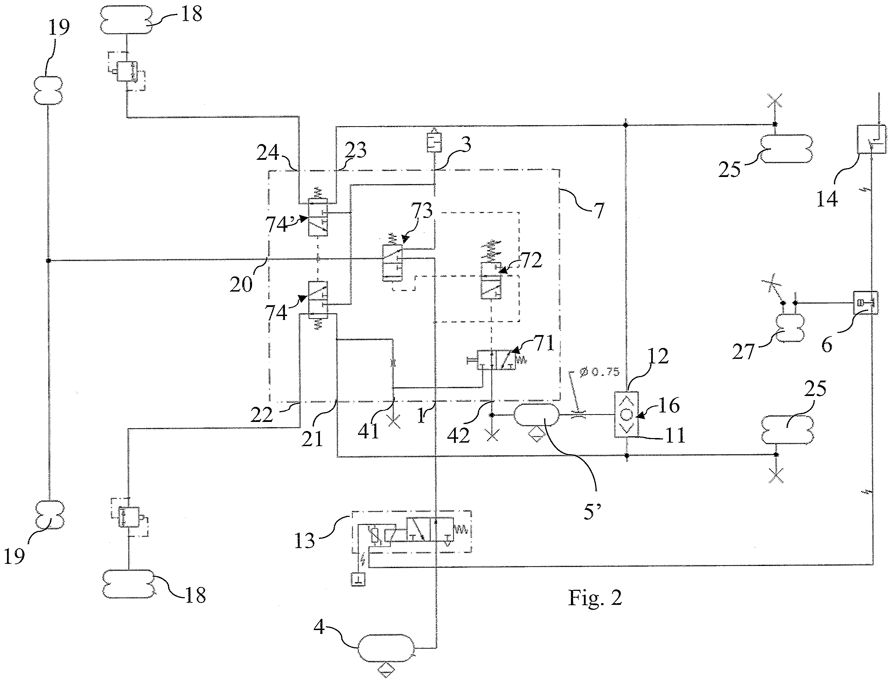

With reference to figure 2, and setting aside at first element 6,13,14 and 27, a circuit scheme for controlling an added axle according to the present invention comprises
- at least a first pair of pneumatic suspensions 25 of a main axle, for example II, or respectively of a first added axle, for example III,
- at least a second pair of pneumatic suspensions 18 of a said first added axle, for example III, or respectively of a further added axle, for example IV,
- at least a pair of pneumatic lifts 19 of a said first addded axle III or respectively said further added axle, for example IV,
- an external compressed air source (4)
- a valve unit 7.

The aforementioned valve unit 7 is formed by valves 72, 73, 74, 74' connected to each other and to external connectors 1, 3, 41, 21, 22, 23, 24, 20, each valve having an active position and a release position according to a respective manual or pressure control; the valve unit being formed by
- a first valve 72, whose control is connected to the first connector 21 so that in release position it connects a second connector 1 with the respective control of a second valve 73, and in resting position it connects the second valve 73 with a third venting connector 3,
- said second valve 73 which in active position connects said second connector 1 with the control of a pair of symmetric valves 74, 74' and with a fourth connector 20, and in release position connects said controls of said pair of symmetric valves 74 and said fourth connector 20 with said third venting connector 3,
- said pair of symmetric valves 74, 74', each one of which, when in active position, connects the respective fifth connector 22, 24 with said third venting connector 3 and, in release position, connects said respective fifth connector 22,24 with a respective sixth connector 21, 23,
- a further two-position valve 71 having a manual bistable control, wherein in a first position connects the control of said first valve 72 with said first connector 21, and in a second position it connects the control of said first valve 72 with a seventh (in the prior art venting) connector 42.

The pair of pneumatic lifts 19 is connected to said fourth connector 20, the first pair of pneumatic suspensions 25 of the main or the added axle is connected with a respective sixth connector 21 or 23; the second pair of suspensions of said first or further added axle is connected to a respective fifth connector 22 or 24; the second connector 1 is connected to the external compressed air source 4.

The present invention includes a stop valve 16 having a first inlet door 11 connected to a right suspension of said first pair of pneumatic suspensions 25 and a second inlet door 12 connected to a left suspension of said first pair of pneumatic suspensions 25 and an outlet connected with said seventh connector 42, according to the present invention said further valve 71 is stable in said second position.

A venting connector in the prior art scheme, namely the connector 42, is now used as the inlet of the pressure signal which determines the valve unit 7 commutation and the lowering of the added axle III or IV. The connector 41 is closed.

The scheme provided by WABCO® excludes any possibility of using the stop valve 16 due to the twofold function of the connector 21.

This solution allows to use a known and widely tested valve unit to control an added axle, both rear III and central IV, monitoring the loads on both sides of the vehicle.

According to a further aspect of the invention, an industrial motor vehicle comprises at least two added axles and two devices such as the one just showed, wherein a control signal for the first added axle III corresponds to a pressure level of a main axle, for example II, and wherein for a second added axle IV, the control signal corresponds to the pressure level of the pneumatic suspensions of the first added axle, for example III. Thus, the reference number 25 corresponds to a pneumatic suspension of a main rear axle II or of an added rear axle III depending on whether the device controls the first added axle III or the second added axle IV.

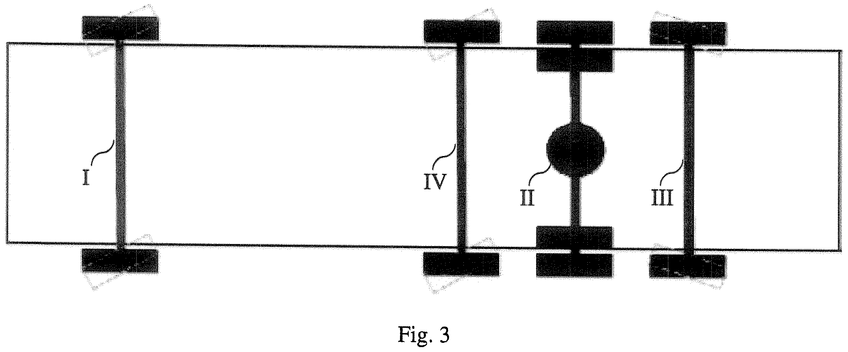

Thus, with reference to figure 3, the second added axle IV is preferably the central axle, namely the axle arranged between a front I and rear II main axle, while a first added axle III is preferably an axle behind the rear axle II of the vehicle.

Using a double stop valve allows the vehicle to have a symmetric behavior when taking a left or a right curve.

Specifically, when the predetermined setting value is reached, the central axle may be lowered in the same way.

The tests performed show that, introducing a narrowing of 0.5 and connecting a one-litre tank 5' between the stop valve 16 and the connector 42, namely respecting the dimensioning suggested by the manufacturer, the managing of the lifting/lowering of the added axle is slow and unstable.

After numerous tests, it was found that a narrowing of 0.75 and a five-litre tank 5 are optimal both for avoiding any damage to the valve unit, both for guaranteeing a rapid dynamic behavior of the added axle controlled by the device.

The scheme showed is advantageously used to control a first added axle III and/or a second added axle IV, which is preferably cascade connected to the first added axle. Namely, the pneumatic suspensions of the second added axle IV are paired with the pneumatic suspensions of the first added axle III when these are in pressure, and the pressure signal for managing the second added axle IV is detected by the pneumatic suspensions of the first added axle III. Advantageously, as the vehicle is loaded, the first added axle III is the first which lowers, then the second added axle IV lowers. Thus the behaviour of the second added axle is coordinated to, but independent from, the control of the first added axle According to another further advantageous embodiment, the second added axle is preferably lowered by a manual control, and, in particular, when the first axle is already lowered. Such result is obtained, with reference to figure 2, by means of a solenoid valve 13 placed between the source 4 and the connector 1. Such solenoid valve 13 is of the normally-open type, which intercepts the intake compressed air flow at the connector 1, and closes such connector, when the solenoid valve is activated, by realizing the venting of the air from the pneumatic lifts 19 and the deactivation of the symmetric valves 74 and 74', so that the connections between the pneumatic suspensions 25 and the pneumatic suspensions 18 may be opened.

Such solenoid valve is controlled by a stable push switch 14 preferably placed in the driver's cabin. The present advantageous embodiment intends to avoid that the central added axle IV may lower to the ground even when the rear added axle III is lifted. Thus, according to another aspect of the invention, an electric pressure switch 6 is preferably added to the control scheme in order to detect the pressure of the pneumatic lift 27 of the rear added axle III and, once a certain pressure threshold is exceeded, it opens the electric circuit controlling the solenoid valve, preventing the lowering of the central added axle. Such pressure threshold in the pneumatic lift 19 is exceeded when the rear added axle III is kept lifted. The valve unit is preferably assembled according to the connection scheme showed in figure 2, with a setting according to which the axle lowers when a pressure of 4.5±0.2 bars is reached in the suspensions of the axles to the ground, and it lifts at a pressure of 2.5±0.2 bars. Such values have to be defined as a function of the features of the vehicle where the control device is mounted.

Advantageously such differences between pressure thresholds allow a more stable control of the lifting/lowering cycle of the axle.

Once the axle can be lifted from the ground, a balance is generated between the pressure of the air springs of the two axles III and IV, which sets at 3.3 bars.

The commutation pressure of the pressure switch 6 placed on the pneumatic lift 27 of the rear added axle III, is 5.5 bars.

In order to correctly distribute the load among the different axles, pressure reducing valves 17 were introduced on the connection lines of the air springs, in order to compensate the different provided geometries.

When it is necessary to lift the axles in order to increase the traction of the drive axle, it is sufficient to control the lifting of the rear added axle III, since it implies the automatic lifting of the central added axle IV.

The present invention is not intended as limited to the exact collocation of the added axles as previously described as an example, implying that the added axles may be arranged in any position and configuration.

The advantages deriving from the use of this invention are evident.

From the description set forth above it will be possible for the person skilled in the art to embody the invention with no need of describing further construction details.

## Claims

1. Device for controlling a first added axle or further added axle of an industrial motor vehicle wherein said first and said further added axles are lifting axles, said device comprising:
- at least a first pair of pneumatic suspensions (25) of a main axle (I, II) or of a first added axle (III), said first pair of pneumatic suspensions (25) comprising a right suspension and a left suspension;
- at least a second pair of pneumatic suspensions (18) of said first added axle (III) or of a further added axle (IV),
- at least a further pair of pneumatic lifts (19) of said first added axle (III) or of said further added axle (IV),
- an external compressed air source (4),
- at least a monolithic valve unit (7) formed by valves (72, 73, 74, 74') connected to each other and having connectors (1, 3, 41, 21, 22, 23, 24, 20) reachable from the outside, each valve having an active position and a release position according to a respective manual or pressure control; the valve unit (7) being formed by
- a first valve (72), whose control is connected to a first connector (21) and connected so that in release position connects a second connector (1) with the respective control of a second valve (73), and in resting position it connects the second valve (73) control with a third venting connector (3),
- said second valve (73), which in active position connects said second connector (1) with the controls of a pair of symmetric valves (74, 74') and with a fourth connector (20), and in release position connects said controls of said pair of symmetric valves (74) and said fourth connector (20) with said third venting connector (3),
- said pair of symmetric valves (74, 74'), each one of them, when in active position, connecting a respective fifth connector (22, 24) with said third venting connector (3) and, in release position, connecting said respective fifth connector (22, 24) with a respective sixth connector (21, 23),
- a further valve (71) having a manual bistable control, having a first position connecting the control of said first valve (72) with said first connector (21) and in a second position connecting the control of said first valve (72) in communication with a seventh connector (42);
said at least a pair of pneumatic lifts (19) being connected with said fourth connector (20),
said at least a first pair of pneumatic suspensions (25) of the main axle (II) or of the added axle(III) being connected with a respective sixth connector (21, 23),
said at least a second pair of suspensions of said first (III) or further (IV) added axle being connected with a respective fifth connector (22, 24),
said second connector (1) being connected with said external compressed air source (4),
and **characterized in that** it comprises a shuttle valve (16) having a first inlet door (11) connected with a right suspension of said first pair of pneumatic suspensions (25) and a second inlet door (12) connected with a left suspension of said first pair of pneumatic suspensions (25) and an outlet connected with said seventh connector (42), and **in that** said further valve (71) comprises an outlet connected with said seventh connector (42) and **in that** said further valve (71) is stably in said second position.

2. Control device according to claim 1, further comprising a solenoid valve (13), of the normally open type, placed between said second connector (1) and said external compressed air source (4), so that when the solenoid valve is activated, the connection between said external source (4) and said second connector (1) is stopped, and said fourth connector (20) and the respective controls of said symmetric valves (74, 74') are brought at the environmental pressure, in order to determine the lowering of the added axle.

3. Device according to claim 2, wherein, when it is intended to control a further added axle (IV), it further comprises an electric push switch (6) suitable to detect a pressure of a pneumatic lift (27) of said first added axle and suitable to stop the power supply of said solenoid valve (13) in order to prevent the lowering of the second added axle (IV) when said first added axle (III) is lifted.

4. Configuration method of a device for controlling a first added axle or a further added axle of an industrial motor wherein said first added axle and said further added axles are lifting axles, said vehicle comprising:
- at least a first pair of pneumatic suspensions (25) of a main axle (I, II) or of a first added axle, for example (III), said first pair of pneumatic suspensions (25) comprising a right suspension and a left suspension;
- at least a second pair of pneumatic suspensions (18) of said first added axle (III) or of a further added axle (IV),
- at least a further pair of pneumatic lifts (19) of said first added axle (III) or said further added axle (IV),
- an external compressed air source (4),
- at least a valve unit (7) formed by valves (72, 73, 74, 74') connected to each other and having connectors (1, 3, 41, 21, 22, 23, 24, 20) to the outside, each valve having an active position and a release position according to a respective manual or pressure control; the valve unit (7) being formed by
- a first valve (72), whose control is connected to a first connector (21) and is connected so that in release position it connects a second connector (1) with the respective control of a second valve (73), and in resting position it connects the second valve (73) control with a third venting connector (3),
- said second valve (73), which in active position connects said second connector (1) with the controls of a pair of symmetric valves (74, 74') and with a fourth connector (20), and in release position connects said controls of said pair of symmetric valves (74) and said fourth connector (20) with said third venting connector (3),
- said pair of symmetric valves (74, 74'), each one of them, when in active position, connecting the respective fifth connector (22, 24) with said third venting connector (3) and, in release position, connecting said respective fifth connector (22, 24) with a respective sixth connector (21, 23),
- a further valve (71) having a manual bistable control, having a first position connecting the control of said first valve (72) with said first connector (21) and in a second position connecting the control of said first valve (72) in communication with a seventh connector (42);
the method comprising the following steps:
- connection of said at least a pair of pneumatic lifts (19) with said fourth connector (20),
- connection of said at least a first pair of pneumatic suspensions (25) of the main axle (I, II) or of the added axle (III) with a respective sixth connector (21, 23), said at least a second pair of suspensions of said first added axle (III) or of said further axle (IV) being connected with a respective fifth connector (22, 24),
- connection of said second connector (1) with said external compressed air source (4),
- arrangement of a shuttle valve (16) having a first inlet door (11) and a second inlet door (12) and an outlet, and connection of an inlet (11 or 12) with a right suspension of said first pair of pneumatic suspensions (25) and of the other outlet (12 or 11) with a left suspension of said first pair of pneumatic suspensions (25) and of said outlet with said seventh connector (42) and
- commutation of said further valve (71) in said second position.

5. Method according to claim 4, wherein, when said valve unit (7) is intended to control a first added axle (III), said connection of said sixth connector (21, 23) is realized by means of the pneumatic suspensions of a main axle (I, II) of the vehicle and, when said valve unit (7) is intended to control a second (IV) added axle, said connection of said sixth connection (21, 23) is realized my means of the pneumatic suspensions of said first added axle (III) of the vehicle.

6. Method according to claim 5, further comprising the step of arranging a solenoid valve (13) placed between said pressure source (4) and said valve unit (7) in order to
- stop a respective compressed air flow,
- release the symmetric valves (74, 74')
- empty the pneumatic lifts (19)
determining a lowering of the first added axle (III) or of the second (IV) added axle.

7. Method according to claim 6, wherein, when the vehicle is equipped with at least a second added axle, further comprising the step of arranging an electric pressure switch (6) suitable to disable the functioning of said solenoid valve (13) of the valve unit (7) controlling at least a second added axle, when said first added axle (III) is lifted.

8. Industrial motor vehicle, comprising a first added axle and a respective control device according to claims 1 or 2.

9. Industrial vehicle according to claim 8, further comprising at least a second added axle and a respective second control device, wherein said respective second control device complies with claim 3.

## Patentansprüche

1. Vorrichtung zum Steuern einer ersten zusätzlichen Achse oder einer weiteren zusätzlichen Achse eines industriellen Kraftfahrzeugs, wobei die erste und die weitere zusätzliche Achse Hubachsen sind, wobei die Vorrichtung Folgendes umfasst:
- zumindest ein erstes Paar pneumatischer Federungseinrichtungen (25) einer Hauptachse (I, II) oder einer ersten zusätzlichen Achse (III), wobei das erste Paar pneumatischer Federungseinrichtungen (25) eine rechte Federungseinrichtung und eine linke Federungseinrichtung umfasst;
- zumindest ein zweites Paar pneumatischer Federungseinrichtungen (18) der ersten zusätzlichen Achse (III) oder einer weiteren zusätzlichen Achse (IV),
- zumindest ein weiteres Paar pneumatischer Hubeinrichtungen (19) der ersten zusätzlichen Achse (III) oder der weiteren zusätzlichen Achse (IV),
- eine externe Quelle (4) für Druckluft,
- zumindest eine monolithische Ventileinheit (7), die aus Ventilen (72, 73, 74, 74') gebildet ist, die miteinander verbunden sind und die Anschlüsse aufweisen (1, 3, 41, 21, 22, 23, 24, 20), die von der Außenseite erreicht werden können, wobei jedes Ventil eine aktive Position und eine Freigabeposition entsprechend einer jeweiligen Hand- oder Drucksteuerung aufweist; wobei die Ventileinheit (7) aus folgenden Ventilen gebildet ist:
- einem ersten Ventil (72), dessen Steuerung mit einem ersten Anschluss (21) verbunden ist und derart verbunden ist, dass es in der Freigabeposition einen zweiten Anschluss (1) mit der entsprechenden Steuerung eines zweiten Ventils (73) verbindet, und es in der Ruheposition die Steuerung des zweiten Ventils (73) mit einem dritten Entlüftungsanschluss (3) verbindet,
- dem zweiten Ventil (73), das in aktiver Position den zweiten Anschluss (1) mit den Steuerungen eines Paares von symmetrischen Ventilen (74, 74') und mit einem vierten Anschluss (20) verbindet, und das in der Freigabeposition die Steuerungen des Paares von symmetrischen Ventilen (74) und den vierten Anschluss (20) mit dem dritten Entlüftungsanschluss (3) verbindet,
- dem Paar symmetrischer Ventile (74, 74'), wobei jedes von diesen dann, wenn es in der aktiven Position ist, einen entsprechenden fünften Anschluss (22, 24) mit dem dritten Entlüftungsanschluss (3) verbindet, und in der Freigabeposition den jeweiligen fünften Anschluss (22, 24) mit einem entsprechenden sechsten Anschluss (21, 23) verbindet,
- einem weiteren Ventil (71), das eine bistabile Handsteuerung aufweist, die in einer ersten Position die Steuerung des ersten Ventils (72) mit dem ersten Anschluss (21) verbindet, und in einer zweite Position die Steuerung des ersten Ventils (72) in Kommunikation mit einem siebten Anschluss (42) verbindet;
wobei zumindest ein Paar pneumatischer Hubeinrichtungen (19) mit dem vierten Anschluss (20) verbunden ist,
wobei zumindest ein erstes Paar pneumatischer Federungseinrichtungen (25) der Hauptachse (II) oder der zusätzlichen Achse (III) mit einem entsprechenden sechsten Anschluss (21, 23) verbunden ist,
wobei zumindest ein zweites Paar von Federungseinrichtungen der ersten (III) oder der weiteren zusätzlichen Achse (IV) mit einem jeweiligen fünften Anschluss (22, 24) verbunden ist,
wobei der zweite Anschluss (1) mit der externen Quelle (4) für Druckluft verbunden ist,
und **dadurch gekennzeichnet, dass** sie ein Wechselventil (16) umfasst, das eine erste Einlassklappe (11), die mit einer rechten Federungseinrichtung des ersten Paares pneumatischer Federungseinrichtungen (25) verbunden ist, und eine zweite Einlassklappe (12), die mit einer linken Federungseinrichtung des ersten Paares pneumatischer Federungseinrichtungen (25) verbunden ist, und einen Auslass aufweist, der mit dem siebten Anschluss (42) verbunden ist, und dadurch, dass
das weitere Ventil (71) einen Auslass umfasst, der mit dem siebten Anschluss (72) verbunden ist, und dadurch, dass das weitere Ventil (71) in der zweiten Position stabil ist.

2. Steuervorrichtung nach Anspruch 1, die ferner ein Magnetventil (13) des normalerweise offenen Typs umfasst, das zwischen dem zweiten Anschluss (1) und der externen Quelle (4) für Druckluft positioniert ist, so dass dann, wenn das Magnetventil (13) aktiv ist, die Verbindung zwischen der externen Quelle (4) und dem zweiten Anschluss (1) unterbrochen wird, und der vierte Anschluss (20) und die jeweiligen Steuerungen der symmetrischen Ventile (74, 74') auf den Umgebungsdruck gebracht werden, um das Absenken der zusätzlichen Achse zu bestimmen.

3. Vorrichtung nach Anspruch 2, wobei dann, wenn eine weitere zusätzliche Achse (IV) gesteuert werden soll, sie ferner einen elektrischen Druckschalter (6) umfasst, der ausgelegt ist, um einen Druck einer pneumatischen Hubeinrichtung (27) der ersten zusätzlichen Achse zu detektieren, und ausgelegt ist, die Stromversorgung des Magnetventils (13) zu unterbrechen, um das Absenken der zweiten zusätzlichen Achse (IV) zu verhindern, wenn die erste zusätzliche Achse (III) angehoben ist.

4. Konfigurationsverfahren für eine Vorrichtung zum Steuern einer ersten zusätzlichen Achse oder einer weiteren zusätzlichen Achse eines industriellen Kraftfahrzeugs, wobei die erste zusätzliche Achse und die weitere zusätzliche Achse Hubachsen sind, wobei das Fahrzeug Folgendes umfasst:
- zumindest ein erstes Paar pneumatischer Federungseinrichtungen (25) einer Hauptachse (I, II) oder einer ersten zusätzlichen Achse, z. B. (III), wobei das erste Paar pneumatischer Federungseinrichtungen (25) eine rechte Federungseinrichtung und eine linke Federungseinrichtung umfasst;
- zumindest ein zweites Paar pneumatischer Federungseinrichtungen (18) der ersten zusätzlichen Achse (III) oder einer weiteren zusätzlichen Achse (IV),
- zumindest ein weiteres Paar pneumatischer Hubeinrichtungen (19) der ersten zusätzlichen Achse (III) oder der weiteren zusätzlichen Achse (IV),
- eine externe Quelle (4) für Druckluft,
- zumindest eine Ventileinheit (7), die aus Ventilen (72, 73, 74, 74') gebildet ist, die miteinander verbunden sind und die Anschlüsse (1, 3, 41, 21, 22, 23, 24, 20) zur Außenseite aufweisen, wobei jedes Ventil eine aktive Position und eine Freigabeposition entsprechend einer jeweiligen Hand- oder Drucksteuerung aufweist; wobei die Ventileinheit (7) aus folgenden Ventilen gebildet ist:
- einem ersten Ventil (72), dessen Steuerung mit einem ersten Anschluss (21) verbunden ist und derart verbunden ist, dass es in der Freigabeposition einen zweiten Anschluss (1) mit der entsprechenden Steuerung eines zweiten Ventils (73) verbindet, und es in der Ruheposition die Steuerung des zweiten Ventils (73) mit einem dritten Entlüftungsanschluss (3) verbindet,
- dem zweiten Ventil (73), das in der aktiven Position den zweiten Anschluss (1) mit den Steuerungen eines Paares von symmetrischen Ventilen (74, 74') und mit einem vierten Anschluss (20) verbindet, und das in der Freigabeposition die Steuerungen des Paares symmetrischer Ventilen (74) und den vierten Anschluss (20) mit dem dritten Entlüftungsanschluss (3) verbindet,
- dem Paar symmetrischer Ventile (74, 74'), wobei jedes von diesen dann, wenn sie in der aktiven Position sind, den jeweiligen fünften Anschluss (22, 24) mit dem dritten Entlüftungsanschluss (3) verbindet, und in der Freigabeposition, den jeweiligen fünften Anschluss (22, 24) mit einem entsprechenden sechsten Anschluss (21, 23) verbindet,
- einem weiteren Ventil (71), das eine bistabile Handsteuerung aufweist, die in einer erste Position die Steuerung des ersten Ventils (72) mit dem ersten Anschluss (21) verbindet, und in einer zweiten Position die Steuerung des ersten Ventils (72) in Kommunikation mit einem siebten Anschluss (42) verbindet;
wobei das Verfahren die folgenden Schritte umfasst:
- Verbinden des zumindest einen Paares pneumatischer Hubeinrichtungen (19) mit dem vierten Anschluss (20),
- Verbinden des mindestens einen ersten Paares pneumatischer Federungseinrichtungen (25) der Hauptachse (I, II) oder der zusätzlichen Achse (III) mit einem entsprechenden sechsten Anschluss (21, 23), wobei das mindestens eine zweite Paar Federungseinrichtungen der ersten zusätzlichen Achse (III) oder der weiteren Achse (IV) mit einem jeweiligen fünften Anschluss (22, 24) verbunden ist,
- Verbinden des zweiten Anschlusses (1) mit der externen Quelle (4) für Druckluft,
- Anordnen eines Wechselventils (16), das eine erste Einlassklappe (11) und eine zweite Einlassklappe (12) und einen Auslass aufweist, und Verbinden einer Einlassklappe (11 oder 12) mit einer rechten Federungseinrichtung des ersten Paares pneumatischer Federungseinrichtungen (25) und der anderen Einlassklappe (12 oder 11) mit einer linken Federungsvorrichtung des ersten Paares pneumatischer Federungseinrichtungen (25) und des Auslasses mit dem siebten Anschluss (42), und
- Umschalten des weiteren Ventils (71) in die zweite Position.

5. Verfahren nach Anspruch 4, wobei dann, wenn die Ventileinheit (7) eine erste zusätzliche Achse (III) steuern soll, das Verbinden des sechsten Anschlusses (21, 23) mittels der pneumatischen Federungseinrichtungen einer Hauptachse (I, II) des Fahrzeugs realisiert wird, und dann, wenn die Ventileinheit (7) eine zweite zusätzliche Achse (IV) steuern soll, das Verbinden des sechsten Anschlusses (21, 23) mittels der pneumatischen Federungsvorrichtungen der ersten zusätzlichen Achse (III) des Fahrzeugs realisiert wird.

6. Verfahren nach Anspruch 5, das ferner den Schritt des Anordnens eines Magnetventils (13) umfasst, das zwischen der Druckquelle (4) und der Ventileinheit (7) positioniert ist, um
- einen entsprechenden Druckluftstrom zu unterbrechen,
- die symmetrischen Ventile (74, 74') freizugeben,
- die pneumatischen Hubeinrichtungen (19) zu leeren,
um ein Absenken der ersten zusätzlichen Achse (III) oder der zweiten zusätzlichen Achse (IV) zu bestimmen.

7. Verfahren nach Anspruch 6, das dann, wenn das Fahrzeug mit zumindest einer zweiten zusätzlichen Achse ausgestattet ist, ferner den Schritt des Anordnens eines elektrischen Druckschalters (6) umfasst, der ausgelegt ist, um die Funktion des Magnetventils (13) der Ventileinheit (7), die zumindest eine zweite zusätzliche Achse steuert, zu unterbrechen, wenn die erste zusätzliche Achse (III) angehoben ist.

8. Industrielles Kraftfahrzeug, das eine erste zusätzliche Achse und eine entsprechende Steuervorrichtung nach Anspruch 1 oder 2 umfasst.

9. Industrielles Kraftfahrzeug nach Anspruch 8, das ferner zumindest eine zweite zusätzliche Achse und eine entsprechende zweite Steuervorrichtung umfasst, wobei die entsprechende zweite Steuervorrichtung Anspruch 3 genügt.

## Revendications

1. Dispositif pour contrôler un premier essieu ajouté ou un essieu ajouté supplémentaire d'un véhicule industriel à moteur, dans lequel ledit premier et ledit second essieu ajouté supplémentaire sont des essieux de levage, ledit dispositif comprenant :
au moins une première paire de suspensions pneumatiques (25) d'un essieu principal (I, II) ou d'un premier essieu ajouté (III), ladite première paire de suspensions pneumatiques (25) comprenant une suspension droite et une suspension gauche ;
au moins une seconde paire de suspensions pneumatiques (18) dudit premier essieu ajouté (III) ou d'un essieu ajouté supplémentaire (IV),
au moins une autre paire d'élévateurs pneumatiques (19) dudit premier essieu ajouté (III) ou dudit essieu ajouté supplémentaire (IV),
une source d'air comprimé externe (4),
au moins une unité de valve monolithique (7) formée par des valves (72, 73, 74, 74') raccordées entre elles et ayant des connecteurs (1, 3, 41, 21, 22, 23, 24, 20) pouvant être atteints depuis l'extérieur, chaque valve ayant une position active et une position de libération selon une commande manuelle ou de pression respective ; l'unité de valve (7) étant formée par :
une première valve (72), dont la commande est raccordée à un premier connecteur (21) et raccordée de sorte que, dans la position de libération, raccorde un deuxième connecteur (1) avec la commande respective d'une seconde valve (73), et dans la position de repos, elle raccorde la commande de la seconde valve (73) avec un troisième connecteur d'aération (3),
ladite seconde valve (73) qui, dans la position active, raccorde ledit deuxième connecteur (1) avec les commandes d'une paire de valves symétriques (74, 74') et avec un quatrième connecteur (20), et dans la position de libération, raccorde lesdites commandes de ladite paire de valves symétriques (74) et ledit quatrième connecteur (20) avec ledit troisième connecteur d'aération (3),
ladite paire de valves symétriques (74, 74'), chacune d'entre elles, lorsqu'elles sont dans la position active, raccordant un cinquième connecteur (22, 24) respectif avec ledit troisième connecteur d'aération (3), et dans la position de libération, raccordant ledit cinquième connecteur (22, 24) respectif avec un sixième connecteur (21, 23) respectif,
une autre valve (71) ayant une commande bistable manuelle, ayant une première position raccordant la commande de ladite première valve (72) avec ledit premier connecteur (21) et dans une seconde position, raccordant la commande de ladite première valve (72) en communication avec un septième connecteur (42) ;
ladite au moins une paire d'élévateurs pneumatiques (19) étant raccordée avec ledit quatrième connecteur (20),
ladite au moins une première paire de suspensions pneumatiques (25) de l'essieu principal (II) ou de l'essieu ajouté (III) étant raccordée avec un sixième connecteur (21, 23) respectif,
ladite au moins une seconde paire de suspensions dudit premier (III) ou autre essieu ajouté (IV) étant raccordée avec un cinquième connecteur (22, 24) respectif,
ledit deuxième connecteur (1) étant raccordé avec ladite source d'air comprimé externe (4),
et **caractérisé en ce qu'**il comprend un sélecteur de circuit (16) ayant une première porte d'entrée (11) raccordée avec une suspension droite de ladite première paire de suspensions pneumatiques (25) et une seconde porte d'entrée (12) raccordée avec une suspension gauche de ladite première paire de suspensions pneumatiques (25) et une sortie raccordée avec ledit septième connecteur (42), et **en ce que** :
l adite valve supplémentaire (71) comprend une sortie raccordée avec ledit septième connecteur (42) et **en ce que** ladite valve supplémentaire (71) est stable dans ladite seconde position.

2. Dispositif de contrôle selon la revendication 1, comprenant en outre une électrovanne (13), de type normalement ouvert, placée entre ledit deuxième connecteur (1) et ladite source d'air comprimé externe (4), de sorte que lorsque l'électrovanne est activée, le raccordement entre ladite source externe (4) et ledit deuxième connecteur (1) est arrêté, et ledit quatrième connecteur (20) et les commandes respectives desdites valves symétriques (74, 74') sont amenés à la pression environnementale, afin de déterminer l'abaissement de l'essieu ajouté.

3. Dispositif selon la revendication 2, dans lequel, lorsqu'il est prévu pour contrôler un essieu ajouté supplémentaire (IV), il comprend en outre un interrupteur électrique à bouton-poussoir (6) approprié pour détecter une pression d'un élévateur pneumatique (27) dudit premier essieu ajouté et approprié pour arrêter l'alimentation de courant de ladite électrovanne (13) afin d'empêcher l'abaissement du second essieu ajouté (IV) lorsque ledit premier essieu ajouté (III) est levé.

4. Procédé de configuration d'un dispositif pour contrôler un premier essieu ajouté ou un essieu ajouté supplémentaire d'un moteur industriel dans lequel ledit premier essieu ajouté et lesdits essieux ajoutés supplémentaires sont des essieux de levage, ledit véhicule comprenant :
au moins une première paire de suspensions pneumatiques (25) d'un essieu principal (I, II) ou d'un essieu ajouté, par exemple (III), ladite première paire de suspensions pneumatiques (25) comprenant une suspension droite et une suspension gauche ;
au moins une seconde paire de suspensions pneumatiques (18) dudit premier essieu ajouté (III) ou d'un autre essieu ajouté (IV),
au moins une autre paire d'élévateurs pneumatiques (19) dudit premier essieu ajouté (III) ou dudit essieu ajouté supplémentaire (IV),
une source d'air comprimé externe (4),
au moins une unité de valve (7) formée par des valves (72, 73, 74, 74') raccordées entre elles et ayant des connecteurs (1, 3, 41, 21, 22, 23, 24, 20) à l'extérieur, chaque valve ayant une position active et une position de libération selon une commande manuelle ou de pression respective ; l'unité de valve (7) étant formée par :
une première valve (72) dont la commande est raccordée à un premier connecteur (21) et est raccordée de sorte que dans la position de libération, elle raccorde un deuxième connecteur (1) avec la commande respective d'une seconde valve (73), et dans la position de repos, elle raccorde la commande de la seconde valve (73) avec un troisième connecteur d'aération (3),
ladite seconde valve (73) qui, dans la position active, raccorde ledit deuxième connecteur (1) avec les commandes d'une paire de valves symétriques (74, 74') et avec un quatrième connecteur (20), et dans la position de libération, raccorde lesdites commandes de ladite paire de valves symétriques (74) et ledit quatrième connecteur (20) avec ledit troisième connecteur d'aération (3),
ladite paire de valves symétriques (74, 74'), chacune d'entre elles, lorsqu'elle est dans la position active, raccordant le cinquième connecteur (22, 24) respectif avec ledit troisième connecteur d'aération (3) et, dans la position de libération, raccordant ledit cinquième connecteur (22, 24) respectif avec un sixième connecteur (21, 23) respectif,
une autre valve (71) ayant une commande manuelle bistable, ayant une première position raccordant la commande de ladite première valve (72) avec ledit premier connecteur (21) et dans une seconde position, raccordant la commande de ladite première valve (72) en communication avec un septième connecteur (42) ;
le procédé comprenant les étapes suivantes :
raccorder ladite au moins une paire d'élévateurs pneumatiques (19) avec ledit quatrième connecteur (20),
raccorder ladite au moins une première paire de suspensions pneumatiques (25) de l'essieu principal (I, II) ou de l'essieu ajouté (III) avec un sixième connecteur (21, 23) respectif, ladite au moins une seconde paire de suspensions dudit premier essieu ajouté (III) ou dudit essieu supplémentaire (IV) étant raccordée avec un cinquième connecteur (22, 24) respectif,
raccorder ledit deuxième connecteur (1) avec ladite source d'air comprimé externe (4),
agencer un sélecteur de circuit (16) ayant une première porte d'entrée (11) et une seconde porte d'entrée (12) et une sortie, et raccorder une entrée (11 ou 12) avec une suspension droite de ladite première paire de suspensions pneumatiques (25) et de l'autre sortie (12 ou 11) avec une suspension gauche de ladite première paire de suspensions pneumatiques (25) et de ladite sortie avec ledit septième connecteur (42), et
commuter ladite valve supplémentaire (71) dans ladite seconde position.

5. Procédé selon la revendication 4, dans lequel, lorsque ladite unité de valve (7) est prévue pour commander un premier essieu ajouté (III), ledit raccordement dudit sixième connecteur (21, 23) est réalisé au moyen des suspensions pneumatiques d'un essieu principal (I, II) du véhicule et, lorsque ladite unité de valve (7) est prévue pour commander un second essieu ajouté (IV), ledit raccordement du sixième connecteur (21, 23) est réalisé au moyen des suspensions pneumatiques dudit premier essieu ajouté (III) du véhicule.

6. Procédé selon la revendication 5, comprenant en outre l'étape d'agencement d'une électrovanne (13) placée entre ladite source de pression (4) et ladite unité de valve (7) afin de :
arrêter un écoulement d'air comprimé respectif,
libérer les valves symétriques (74, 74'),
vider les élévateurs pneumatiques (19),
déterminer un abaissement du premier essieu ajouté (III) ou du second essieu ajouté (IV).

7. Procédé selon la revendication 6, dans lequel, lorsque le véhicule est équipé avec au moins un second essieu ajouté, comprenant en outre l'étape d'agencement d'un commutateur de pression électrique (6) approprié pour désactiver le fonctionnement de ladite électrovanne (13) de l'unité de valve (7) commandant au moins ledit second essieu ajouté, lorsque ledit premier essieu ajouté (III) est levé.

8. Véhicule industriel à moteur, comprenant un premier essieu ajouté et un dispositif de contrôle respectif selon les revendications 1 ou 2.

9. Véhicule industriel selon la revendication 8, comprenant en outre au moins un second essieu ajouté et un second dispositif de contrôle respectif, dans lequel ledit second dispositif de contrôle respectif est conforme à la revendication 3.
